(19) Europäisches Patentamt / European Patent Office / Office européen des brevets

(11) **EP 3 078 491 B1**

(12) **EUROPEAN PATENT SPECIFICATION**

(45) Date of publication and mention
of the grant of the patent:
**23.12.2020 Bulletin 2020/52**

(21) Application number: **14868263.6**

(22) Date of filing: **20.11.2014**

(51) Int Cl.:
*B32B 27/34* (2006.01)   *B32B 27/18* (2006.01)
*B65D 1/00* (2006.01)    *B65D 81/24* (2006.01)
*B65D 81/26* (2006.01)   *B32B 7/12* (2006.01)
*B32B 27/30* (2006.01)   *B32B 1/02* (2006.01)

(86) International application number:
**PCT/JP2014/080820**

(87) International publication number:
**WO 2015/083558 (11.06.2015 Gazette 2015/23)**

(54) **MULTILAYER CONTAINER**

MEHRSCHICHTIGER BEHÄLTER

RÉCIPIENT MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2013 JP 2013251832**

(43) Date of publication of application:
**12.10.2016 Bulletin 2016/41**

(73) Proprietor: **Mitsubishi Gas Chemical Company,
Inc.
Tokyo 100-8324 (JP)**

(72) Inventors:
• **ODA, Takafumi**
**Hiratsuka-shi
Kanagawa 254-0016 (JP)**

• **TSUNAKA, Nobuhide**
**Hiratsuka-shi
Kanagawa 254-0016 (JP)**
• **KATO, Tomonori**
**Hiratsuka-shi
Kanagawa 254-0016 (JP)**

(74) Representative: **Vossius & Partner
Patentanwälte Rechtsanwälte mbB
Siebertstrasse 3
81675 München (DE)**

(56) References cited:
**JP-A- H1 086 291      JP-A- H09 234 832
JP-A- H10 235 769     JP-A- 2000 273 328
JP-A- 2000 273 328    JP-A- 2001 058 363
JP-A- 2004 160 987    JP-A- 2011 131 578
JP-A- 2012 201 412    US-A- 5 849 380
US-A1- 2004 076 781**

**Description**

TECHNICAL FIELD

The present invention relates to a multilayer container, and more specifically to a deoxygenating multilayer container.

BACKGROUND ART

As a packaging material for foods and the like having a yearly-based long shelf life, can has been used. In the case where foods and the like are stored by can, the can can exhibit a potent effect for various gas-barrier properties against oxygen, water vapor and the like, but has some problems in that, before opened, the contents could not be visually confirmed, that the canned products could not be heated in a microwave oven, that the canned foods are difficult to take out when they are put in serving dishes or the like, and that the used cans could not be piled up for disposal after use and are therefore kept voluminous, that is, the can lacks in disposal aptitude.

Given the situation, application of plastic containers has become investigated also to the above-mentioned packaging containers that are required to have a long shelf life. As one example, a packaging container formed of a multilayer material container prepared by providing a deoxygenating resin layer containing a deoxidant composition incorporated therein around an already-existing gas-barrier container has been developed, wherein the gas-barrier performance of the container is improved and a deoxygenation function is imparted to the container itself.

PTL 1 discloses a deoxygenating packaging container formed by thermoforming a deoxygenating multilayer body that has an outer layer of a gas-barrier layer formed of a gas-barrier resin and an inner layer of an oxygen-permeable layer formed of an oxygen-permeable resin and, between the two, an interlayer of an oxygen-absorbing layer formed of a deoxidant composition-incorporated oxygen-absorbing resin composition, with the inner layer side kept inside the container, wherein the gas-barrier resin is a mixed resin of a polyamide or a polyamide copolymer, in which the content of the amide structure unit formed through polycondensation of metaxylylenediamine and adipic acid is 90 mol% or more, and an amorphous polyamide in a mixing ratio (mass%) of 80/20 to 30/70.

JP 2000 273328 A discloses an oxygen absorbing resin composition and a deoxygenating multilayer body, with the multilayer container comprising an oxygen-permeable layer, an oxygen-absorbing layer, an adhesive layer and a gas barrier layer . US 2004/0076781 A1 discloses a gas-barrier multi-layer structure comprising at least one gas-barrier layer A and at least one thermoplastic resin layer B.

CITATION LIST

PATENT LITERATURE

PTL 1: Japanese Patent No. 3978542

SUMMARY OF INVENTION

TECHNICAL PROBLEM

In the packaging container described in PTL 1, amorphous polyamide is incorporated in the gas-barrier layer in an amount of 20 to 70 mass%, from the viewpoint of molding processability from a sheet or film to the container. However, the packaging container is still insufficient in point of the oxygen-barrier performance and the oxygen absorbability thereof, and the oxygen-barrier performance and the oxygen absorbability are desired to be further improved.

The problem to be solved by the invention is to provide a multilayer container having oxygen-barrier performance and oxygen absorbability favorable for food packaging materials that are required thermal sterilization treatment, which can more effectively prevent oxygen penetration into the container after thermal sterilization and just after retort treatment without worsening the outward appearance on thermoforming.

SOLUTION TO PROBLEM

The present invention provides a multilayer container as described below.

<1> A multilayer container including, as layered in that order from an inner layer to an outer layer, an oxygen-permeable layer (A) containing an oxygen-permeable resin as the main component thereof, an oxygen-absorbing layer (B) formed of an oxygen-absorbing resin composition containing a deoxidant composition and a thermoplastic resin, an adhesive layer (C) containing an adhesive resin as the main component thereof, and a gas-barrier layer (D) containing a gas-barrier resin as the main component thereof, wherein:

the gas-barrier resin is a polyamide resin (X) including a diamine unit containing a metaxylylenediamine unit in an amount of 70 mol% or more and a dicarboxylic acid unit containing 85 to 96 mol% of an $\alpha,\omega$-linear aliphatic dicarboxylic acid unit having 4 to 20 carbon atoms and 15 to 4 mol% of an aromatic dicarboxylic acid unit, the thickness of the oxygen-permeable layer (A) is 15 to 40% of the total thickness of the multilayer container, the thickness of the oxygen-absorbing layer (B) is 10 to 40% of the total thickness of the multilayer container, and wherein an adhesive layer (E) containing an adhesive resin as the main component thereof is layered as an outer layer of the gas-barrier layer (D), and an oxygen-absorbing layer (F) formed of an oxygen-absorbing resin composition containing a deoxidant composition and a resin is layered as an outer layer of the adhesive layer (E), and the thickness of the oxygen-absorbing layer (F) is 10 to 40% of the total thickness of the multilayer container.

In this description, the expression of "containing ... as the main component" means that it contains the component in an amount of preferably 90 mass% or more, more preferably 95 mass% or more, even more preferably 98 mass% or more, and may contain any other component within a range not detracting from the advantageous effects of the present invention.

ADVANTAGEOUS EFFECTS OF INVENTION

The multilayer container of the present invention has oxygen-barrier performance and oxygen absorbability favorable for food packaging materials that are required thermal sterilization treatment, and can more effectively prevent oxygen penetration into the container after thermal sterilization and just after retort treatment without worsening the outward appearance on thermoforming.

DESCRIPTION OF EMBODIMENTS

The multilayer container of the present invention includes, as layered in that order from an inner layer to an outer layer, an oxygen-permeable layer (A) containing an oxygen-permeable resin as the main component thereof, an oxygen-absorbing layer (B) formed of an oxygen-absorbing resin composition containing a deoxidant composition and a thermoplastic resin, an adhesive layer (C) containing an adhesive resin as the main component thereof, and a gas-barrier layer (D) containing a gas-barrier resin as the main component thereof.

The multilayer container of the present invention has, in addition to the oxygen-permeable layer (A), the oxygen-absorbing layer (B), the adhesive layer (C) and the gas-barrier layer (D), an adhesive layer (E) containing an adhesive resin as the main component thereof which is layered as an outer layer of the gas-barrier layer (D), and an oxygen-absorbing layer (F) formed of an oxygen-absorbing resin composition containing a deoxidant composition and a thermoplastic resin which is layered as an outer layer of the adhesive layer (E). Further, a protective layer (G) containing a thermoplastic resin as the main component thereof may be layered as an outer layer of the oxygen-absorbing layer (F). In particular, a multilayer container having a 7-layered configuration of the layers (A) to (G) has the oxygen-absorbing layer (B) and (F) on the inner layer side and the outer layer side of the gas-barrier layer (D), and therefore can absorb not only oxygen inside the container but also oxygen penetrating thereinto from outside the container, and consequently, the container of the type can more effectively prevent oxygen penetration thereinto from just after retort treatment and after thermal sterilization.

1. Oxygen-Permeable Layer (A)

The oxygen-permeable layer (A) plays a role of an isolation layer of preventing direct contact between the contents in the container and the oxygen-absorbing layer (B), and additionally acts for rapid and efficient permeation of oxygen inside the container therethrough in order that the oxygen-absorbing layer (B) could fully exhibit the oxygen-absorbing function thereof.

The oxygen-permeable layer (A) contains an oxygen-permeable resin as the main component thereof.

As the oxygen-permeable resin, a thermoplastic resin is preferably used. For example, there are mentioned polyolefins such as polyethylene, polypropylene, polybutene, polybutadiene, polymethylpentene, ethylene-propylene copolymer, propylene-ethylene block copolymer, etc.; polyolefin copolymers such as ethylene-vinyl acetate copolymer, ethylene-acrylic acid copolymer, ethylene-acrylate copolymer, ethylene-methacrylic acid copolymer, ethylene-methacrylate copolymer, etc.; graft polymers of the above-mentioned polyolefin or the above-mentioned polyolefin copolymer and silicone resin; polyesters such as polyethylene terephthalate, etc.; polyamides such as nylon 6, nylon 66, etc.;

ionomers; elastomers, etc. One alone or two or more of these may be used either singly or as combined.

The oxygen-permeable resin is preferably compatible with the oxygen-absorbing resin composition for use in the oxygen-absorbing layer (B), and when resins that are compatible with each other are selected for these, the resins of the oxygen-permeable layer (A) and the oxygen-absorbing layer (B) may be co-extruded and layered by adhesion.

The oxygen-permeable resin is preferably a polypropylene resin from the viewpoint of heat resistance in retort treatment and hot water treatment.

The oxygen-permeable layer (A) often plays a role of a sealant layer as the innermost layer of the multilayer container. Preferably, a heat-sealable resin is selected, but an additional heat-seal layer may be provided on the inner surface side. If needed, additives such as a colorant, a filler, an antistatic agent, a stabilizer and the like may be incorporated in the resin to constitute the innermost layer.

As described above, the oxygen-permeable layer (A) is required to play a role of an isolation layer between the contents in the container and the oxygen-absorbing layer (B), and is further required to act for rapid and efficient permeation of oxygen inside the container therethrough. Consequently, irrespective of the presence or absence of any other layer such as the above-mentioned heat-seal layer or the like and irrespective of the layer thickness of the oxygen-permeable layer (A) itself, it is preferable that the oxygen permeability of the oxygen-permeable layer (A) is at least 100 mL/m$^2$·day·atm (23°C, 100% RH) or more.

The thickness of the oxygen-permeable layer (A) is preferably as thin as possible within an acceptable range in point of strength, processability, cost and the like, so as to increase the oxygen permeation through the layer. From this viewpoint, the thickness of the oxygen-permeable layer (A) is 15 to 40% of the total thickness of the multilayer container, preferably 15 to 30%, more preferably 20 to 25%. In the present invention, the thickness ratio of each layer relative to the total thickness of the multilayer container may be measured according to the method described in the section of Examples.

As obvious from the above-mentioned role thereof, the oxygen-permeable layer (A) is not always limited to a non-porous resin layer, but may be a microporous membrane of the above-mentioned thermoplastic resin or a nonwoven fabric thereof.

2. Oxygen-Absorbing Layer (B)

The oxygen-absorbing layer (B) plays a role of absorbing oxygen that could not be completely blocked off by the gas-barrier layer (D) and may penetrate therethrough from outside the container, and additionally plays a role of absorbing oxygen inside the container via the oxygen-permeable layer (A).

The oxygen-absorbing layer (B) is formed of an oxygen-absorbing resin composition containing a deoxidant composition and a thermoplastic resin.

The oxygen-absorbing resin composition is a resin composition prepared by kneading and dispersing a deoxidant composition in a thermoplastic resin.

The deoxidant composition is not specifically limited, and any known deoxidant composition is usable. For example, there are mentioned deoxidant compositions containing, as the base component for oxygen absorption reaction, any of metal powder such as iron powder, etc.; reducible inorganic substances such as iron compounds, etc.; reducible organic substances such as polyphenols, polyalcohols, ascorbic acid or its salts, etc.; metal complexes, etc. Among these, a deoxidant composition containing iron powder as the main component thereof is preferred from the viewpoint of deoxidation performance, and in particular, a deoxidant composition containing iron powder and a metal halide is more preferred, and a deoxidant composition where a metal halide is adhered to iron powder is even more preferred.

Iron powder for use in the deoxidant composition is not specifically limited so far as it is dispersible in resin and is able to induce deoxidation reaction, and iron powder generally usable as a deoxidant may be used here. Specific examples of iron powder include reduced iron powder, spongy iron powder, sprayed iron powder, iron grinding powder, electrolytic iron powder, crushed iron, etc. Iron powder in which the content of oxygen, silicon and the like as impurities therein is smaller is preferred, and iron powder having a metal iron content of 95% by mass or more is especially preferred.

The maximum particle size of the iron powder is preferably 0.5 mm or less, more preferably 0.4 mm or less, even more preferably 0.05 to 0.35 mm or less, still more preferably 0.05 to 0.3 mm. The mean particle size of the iron powder is preferably 0.3 mm or less, more preferably 0.2 mm or less, even more preferably 0.05 to 0.2 mm, still more preferably 0.05 to 0.1 mm. From the viewpoint of the appearance of the multilayer container, iron powder having a smaller particle size is more preferable as capable of forming a smooth oxygen-absorbing layer, but from the viewpoint of cost, the particle size of the iron powder may be large in some degree within a range not having any significant influence on the appearance of the container.

The maximum particle size and the mean particle size of iron powder may be measured according to the method described in the section of Examples.

The metal halide for use in the deoxidant composition is one that catalyzes the oxygen absorption reaction of metal iron. Preferred examples of the metal include at least one selected from the group consisting of alkali metals, alkaline earth metals, copper, zinc, aluminium, tin, iron, cobalt and nickel. In particular, lithium, potassium, sodium, magnesium, calcium, barium and iron are preferred. Preferred examples of the halide include chlorides, bromide and iodides, and chlorides are especially preferred.

The amount of the metal halide to be incorporated is preferably 0.1 to 20 parts by mass relative to 100 parts by mass of metal. It is preferable that substantially all of the metal of the metal halide adheres to metal iron and there are few metal halides that are free in the deoxidant composition, and when the metal halide acts effectively, its amount of 0.1 to 5 parts by mass may be enough.

In the present invention, an iron powder composition in which the surface is coated with a metal halide can be favorably used as the deoxidant composition. The iron powder composition may be prepared by mixing an aqueous solution of a metal halide in iron powder, and then drying the resultant mixture for water removal.

Preferably, the metal halide is added according to a method where it does not easily separate from metal iron, and for example, a method of burying metal halide microparticles in the recesses of the surface of metal iron by grinding and mixing them using a ball mill, a speed mill or the like; a method of adhering metal halide microparticles to the surface of metal iron using a binder; and a method of mixing an aqueous solution of a metal halide and metal iron and drying the resultant mixture so as to adhere metal halide microparticles to the surface of metal iron are preferred.

Preferably, the water content in the deoxidant composition is small, and the water content in the deoxidant composition is preferably 0.2% by mass or less, more preferably 0.1% by mass or less. In the case where the multilayer container of the present invention is used as a packaging material, the deoxidant composition receives moisture and exhibits an oxygen absorption function. The deoxidant composition in which the base component is iron powder is used as a granular matter, and the mean particle size thereof is preferably 0.3 mm or less, more preferably 0.2 mm or less, even more preferably 0.05 to 0.2 mm.

The thermoplastic resin for use in the oxygen-absorbing resin composition is preferably a thermoplastic resin whose Vicat softening point is 110 to 130°C. By using a thermoplastic resin whose softening point falls within the above range, it may be possible to prevent any local overheating around the deoxidant composition in the oxygen-absorbing resin composition in thermoforming to give a deoxidant multilayer body, and therefore it may be possible to form a container having a good appearance.

Specific examples of the thermoplastic resin for use in the oxygen-absorbing resin composition include polyolefins such as polyethylene, polypropylene, polybutadiene, polymethylpentene, etc.; elastomers and their modified derivatives, and mixed resins thereof. Above all, resins containing polypropylene as the main component thereof are preferably used. The thermoplastic resin for use in the oxygen-absorbing resin composition may receive thermal history once or more in an extruder at a temperature not lower than the melting point of the resin, that is, a so-called recycled resin may be used. The recycled resin may be a single substance or a mixture that contains the above-mentioned thermoplastic resin as the main component thereof. For example, those prepared by grinding the waste in forming the deoxidant multilayer body or multilayer container of the present invention, or those prepared by again melting the ground waste, extruding it to give strands and pelletizing them, or mixtures thereof may be used as the recycled resin.

The ratio by mass of the deoxidant composition to the thermoplastic resin (deoxidant composition/thermoplastic resin) in the oxygen-absorbing resin composition is preferably 5/95 to 50/50, more preferably 10/90 to 40/60. Falling within the range, the composition can exhibit good deoxidation performance without having any negative influence on the molding processability and appearance of container.

From the viewpoint of preventing foaming and evading loss of effects in an unattended situation, it is preferable that calcium oxide is added to the oxygen-absorbing resin composition. If needed, additives of an antioxidant such as a phenolic antioxidant, a phosphorus-based antioxidant or the like; a colorant such as an organic or an inorganic dye or pigment or the like; a dispersant such as a silane-based dispersant, a titanate-based dispersant or the like; a polyacrylic acid-based water absorbent; a filler such as silica, clay or the like; and a gas adsorbent such as zeolite, activated carbon or the like may also be added.

The oxygen-absorbing resin composition may be prepared by kneading a deoxidant composition and a thermoplastic resin, then optionally kneading an additive such as calcium oxide or the like therein, and thus uniformly dispersing the deoxidant composition in the thermoplastic resin. In the case where an additive is added, it is preferable from the viewpoint of uniformly dispersing the additive, that the additive is first kneaded in a thermoplastic resin to prepare an additive-containing resin composition and then, a deoxidant composition, a thermoplastic resin and the additive-containing resin composition are kneaded to prepare the oxygen-absorbing resin composition.

The thickness of the oxygen-absorbing layer (B) is 10 to 40% of the total thickness of the multilayer container, preferably 15 to 25%, more preferably 15 to 20%. Falling within the range, the layer can exhibit good deoxidation performance without having any negative influence on the molding processability and appearance of container.

3. Adhesive Layer (C)

The adhesive layer (C) plays a role of adhering the oxygen-absorbing layer (B) and the gas-barrier layer (D) at a sufficient strength.

The adhesive layer (C) contains an adhesive resin as the main component thereof.

The adhesive resin is not specifically limited, and any known adhesive thermoplastic resin may be used. For example, there are mentioned acid-modified polyolefins prepared by modifying an olefinic resin with an unsaturated carboxylic acid such as acrylic acid, methacrylic acid, maleic acid, maleic anhydride, etc. One alone or two or more of these may be used either singly or as combined. From the viewpoint of the adhesiveness to the oxygen-absorbing layer (B), the adhesive resin is preferably an acid-modified polyolefin prepared by modifying the same resin as that constituting the oxygen-absorbing resin (B) with an unsaturated carboxylic acid. For example, in the case where the resin to form the oxygen-absorbing layer (B) is a resin containing polypropylene as the main component thereof, it is preferable that the adhesive resin is an acid-modified thermoplastic resin containing polypropylene as the main component thereof.

The thickness of the adhesive layer (C) is, from the viewpoint of adhesiveness and cost, preferably 0.1 to 15% of the total thickness of the multilayer container, more preferably 1 to 10%, even more preferably 3 to 8%.

4. Gas-Barrier Layer (D)

The gas-barrier layer (D) plays a role of blocking oxygen from penetrating from outside the container therethrough.

The gas-barrier layer (D) contains a gas-barrier resin as the main component thereof, and the gas-barrier resin is a polyamide resin (X) including a diamine unit containing a metaxylylenediamine unit in an amount of 70 mol% or more and a dicarboxylic acid unit containing 85 to 96 mol% of an $\alpha,\omega$-linear aliphatic dicarboxylic acid unit having 4 to 20 carbon atoms and 15 to 4 mol% of an aromatic dicarboxylic acid unit.

The diamine unit in the polyamide resin (X) contains, from the viewpoint of expressing excellent gas-barrier performance, a metaxylylenediamine unit in an amount of 70 mol% or more, preferably in an amount of 80 to 100 mol%, more preferably 90 to 100 mol%.

Examples of the compound capable of constituting the other diamine unit than the metaxylylenediamine unit include aromatic diamines such as paraxylylenediamine, etc.; alicyclic diamines such as 1,3-bis(aminomethyl)cyclohexane, 1,4-bis(aminomethyl)cyclohexane, etc.; linear or branched aliphatic diamines such as tetramethylenediamine, hexamethylenediamine, nonamethylenediamine, 2-methyl-1,5-pentanediamine, etc. However, the compound is not limited to these.

The dicarboxylic acid unit in the polyamide resin (X) contains 85 to 96 mol% of an $\alpha,\omega$-linear aliphatic dicarboxylic acid unit having 4 to 20 carbon atoms and 15 to 4 mol% of an aromatic dicarboxylic acid unit. In the dicarboxylic acid unit in the polyamide resin (X), the content of the $\alpha,\omega$-linear aliphatic dicarboxylic acid unit having 4 to 20 carbon atoms is preferably 88 to 96 mol%, more preferably 90 to 94 mol%, and the content of the aromatic dicarboxylic acid unit therein is preferably 12 to 4 mol%, more preferably 10 to 6 mol%.

The content of the $\alpha,\omega$-linear aliphatic dicarboxylic acid unit having 4 to 20 carbon atoms in the dicarboxylic acid unit is 85 mol% or more, and therefore the resin can prevent reduction in the gas-barrier performance and excessive reduction in the crystallinity thereof. Containing an aromatic dicarboxylic acid unit in an amount of 4 mol% or more, the amorphousness of the polyamide resin (X) increases and the crystallization rate thereof lowers, and therefore the thermoformability in molding into containers may be thereby bettered.

When the content of the aromatic dicarboxylic acid unit is more than 15 mol%, the polymerization to give the polyamide resin (X) could not be on the level of the melt viscosity necessary for forming multilayer containers and therefore, multilayer containers would be difficult to form. Further, since the polyamide resin (X) could not almost be crystalline, the multilayer container using the polyamide resin (X) as the gas-barrier layer is unfavorable in that it would be greatly whitened in thermal sterilization such as a boiling sterilization treatment by immersion in hot water at 80 to 100°C or a pressurized hot water treatment at 100°C or more (retort treatment) or the like, or during high-temperature storage.

Examples of the compound capable of constituting the $\alpha,\omega$-linear aliphatic dicarboxylic acid unit having 4 to 20 carbon atoms include succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, etc., but the compound is not limited to these. One alone or two or more of these may be used either singly or as combined. Among these, adipic acid is preferred.

Examples of the compound capable of constituting the aromatic dicarboxylic acid unit include terephthalic acid, isophthalic acid, 2,6-naphthalenedicarboxylic acid, etc., but the compound is not limited to these. One alone or two or more of these may be used either singly or as combined. Among these, isophthalic acid is preferred from the viewpoint of sublimability and availability.

In the present invention, the polyamide resin (X) is crystalline, and the semi-crystallization time (ST(P)) thereof in crystallization at 160°C in depolarization photometry is preferably within a range of 80 to 700 seconds, more preferably 80 to 650 seconds, even more preferably 85 to 300 seconds, still more preferably 90 to 200 seconds. By controlling the semi-crystallization time to be 80 seconds or more, molding failure owing to crystallization during secondary processing such as deep drawing of multilayer containers may be evaded. When the semi-crystallization time is 700 seconds or less, crystallinity may be prevented from excessively lowering while maintaining secondary processability, and further, multilayer containers may be prevented from being deformed owing to softening of the polyamide layer during hot water treatment or retort treatment.

The oxygen transmission coefficient of the polyamide resin (X) in an environment at 23°C and 60% RH is, from the viewpoint of good gas barrier performance, preferably 0.09 mL·mm/m$^2$·day·atm or less, more preferably 0.05 to 0.09 mL·mm/m$^2$·day·atm, even more preferably 0.05 to 0.070 mL·mm/m$^2$·day·atm. The oxygen transmission coefficient may be measured according to ASTM D3985, and for example, may be measured using "OX-TRAN 2/21" manufactured by Mocon Inc.

The polyamide resin (X) may be obtained through polycondensation of a diamine component containing metaxylylenediamine in an amount of 70 mol% or more and a dicarboxylic acid component containing 85 to 96 mol% of an $\alpha,\omega$-linear aliphatic dicarboxylic acid having 4 to 20 carbon atoms and 15 to 4 mol% of an aromatic dicarboxylic acid. During polycondensation, a small amount of a monoamine or a monocarboxylic acid may be added as a molecular weight-controlling agent.

Preferably, the polyamide resin (X) is one produced through polycondensation according to a melt polymerization method followed by solid-phase polymerization. As a melt polycondensation method, for example, there is mentioned a method of polymerizing a nylon salt composed of a diamine component and a dicarboxylic acid component by heating it in a molten state under pressure and in the presence of water while removing the added water and the condensation water. In addition, there is also mentioned a method of polycondensation including directly adding a diamine component to a dicarboxylic acid component in a molten state. In this case, the polycondensation is carried out in such a manner that, for keeping the reaction system in a uniform liquid condition, the diamine component is continuously added to the dicarboxylic acid component and during this, the reaction system is heated so that the reaction temperature could not be lower than the melting point of the formed oligoamide and polyamide resin.

Preferably, the solid-phase polymerization is carried out after the polymer obtained in melt polycondensation has been once taken out. As a heating device to be used in solid-phase polymerization, a batch-type heating device excellent in airtightness and capable of highly preventing contact between oxygen and polyamide resin is preferred to a continuous heating device, and in particular, a rotary drum-type heating device called a tumble dryer, a conical dryer, or a rotary dryer, and a cone-shaped heating device equipped with a rotary blade inside it, called a Nauta mixer, may be favorably used. However, the heating device is not limited to these.

The solid-phase polymerization process for the polyamide resin preferably includes, for example, for the purpose of preventing the polyamide resin pellets from fusing together and preventing the polyamide resin pellets from adhering to the inner wall of devices, a first step for increasing the crystallinity degree of the polyamide resin, a second step of increasing the molecular weight of the polyamide resin and a third step of cooling the polyamide resin after the solid-phase polymerization has been promoted to give a desired molecular weight of the resin. Preferably, the first step is carried out at a temperature not higher than the glass transition temperature of the polyamide resin. Preferably, the second step is carried out at a temperature lower than the melting point of the polyamide resin under reduced pressure, but is not limited thereto.

The polyamide resin (X) may contain any optional additives such as a lubricant, a delusterant, a heat-resistant stabilizer, a weather-resistant stabilizer, a UV absorbent, a crystallization nucleating agent, a plasticizer, a flame retardant, an antistatic agent, a coloration inhibitor, a gelling inhibitor, etc., within a range not detracting from the advantageous effects of the present invention.

The thickness of the gas-barrier layer (D) is not specifically limited, but is, from the viewpoint of gas-barrier performance, transparency and cost, preferably 2 to 20% of the total thickness of the multilayer container, more preferably 5 to 15%, even more preferably 5 to 10%.

5. Adhesive Layer (E)

The adhesive layer (E) plays a role of adhering the gas-barrier layer (D) and the oxygen-absorbing layer (F) at a sufficient strength.

Preferably, the adhesive layer (E) contains an adhesive resin as the main component thereof. As the adhesive resin, the above-mentioned adhesive thermoplastic resin may be used, and the resin may be the same as or different from the adhesive resin for use in the adhesive layer (C).

The thickness of the adhesive layer (E) is, from the viewpoint of adhesiveness and cost, preferably 0.1 to 15% of the total thickness of the multilayer container, more preferably 1 to 10%, even more preferably 3 to 8%.

## 6. Oxygen-Absorbing Layer (F)

The oxygen-absorbing layer (F) plays a role of absorbing oxygen to penetrate from outside the container and also plays a role of protecting the gas-barrier layer (D).

The oxygen-absorbing layer (F) is formed of an oxygen-absorbing resin composition containing a deoxidant composition and a thermoplastic resin. As the oxygen-absorbing resin composition, the above-mentioned oxygen-absorbing resin composition may be used, and the composition may be the same as or different from the oxygen-absorbing resin composition for use for the oxygen-absorbing layer (B).

The thickness of the oxygen-absorbing layer (F) is 10 to 40% of the total thickness of the multilayer container, and is preferably 15 to 25%, more preferably 15 to 20%. Falling within the range, the layer can exhibit good deoxidation performance without having any negative influence on the molding processability and the appearance of containers.

## 7. Protective Layer (G)

The protective layer (G) that may be layered as the outer layer of the oxygen-absorbing layer (F) plays a role of protecting the gas-barrier layer (D) or the oxygen-absorbing layer (F).

The protective layer (G) preferably contains a thermoplastic resin as the main component thereof. For example, there are mentioned polyolefins such as polyethylene, polypropylene, polybutene, polybutadiene, polymethylpentene, ethylene-propylene copolymer, propylene-ethylene block copolymer, etc.; polyolefin copolymers such as ethylene-vinyl acetate copolymer, ethylene-acrylic acid copolymer, ethylene-acrylate copolymer, ethylene-methacrylic acid copolymer, ethylene-methacrylate copolymer, etc.; graft polymers of the above-mentioned polyolefins or the above-mentioned polyolefin copolymers with silicone resin; polyesters such as polyethylene terephthalate, etc.; polyamides such as nylon 6, nylon 66, etc.; ionomers; elastomers, etc. One alone or two or more of these may be used either singly or as combined. Above all, at least one selected from the group consisting of polypropylene resin, polyamide resin and polyester resin is preferred, and polypropylene resin is more preferred.

The thickness of the protective layer (G) is not specifically limited and may vary depending on the layer configuration of the multilayer container. For example, in the case of a 7-layered configuration composed of, as layered from an inner layer to an outer layer in that order, an oxygen-permeable layer (A), an oxygen-absorbing layer (B), an adhesive layer (C), a gas-barrier layer (D), an adhesive layer (E), an oxygen-absorbing layer (F) and a protective layer (G), the thickness is preferably 15 to 60% of the total thickness of the multilayer container, more preferably 15 to 40%, even more preferably 15 to 30%.

The total thickness of the multilayer container is, from the viewpoint of toughness, impact resistance and barrier performance as containers, preferably 0.2 to 2.0 mm, more preferably 0.5 to 1.8 mm, even more preferably 0.8 to 1.5 mm.

The above-mentioned layers may be layered by suitably combining known methods of a co-extrusion method, various lamination methods and various coating methods, depending on the property of the material of each layer, the working object and the working process. For example, using extruders corresponding to the constitutive layers of an oxygen-permeable layer (A), an oxygen-absorbing layer (B), an adhesive layer (C) and a gas-barrier layer (D), the materials to constitute the individual layers are melt-kneaded, and simultaneously melt-extruded through a multilayer multi-die such as a T-die, a circular die or the like, thereby giving a multilayer sheet having a four-layer or more multilayer configuration of, as layered from an inner layer to an outer layer in that order, the oxygen-permeable layer (A), the oxygen-absorbing layer (B), the adhesive layer (C) and the gas-barrier layer (D), as a deoxidant multilayer body.

The resultant deoxidant multilayer body is thermoformed with the inner layer side kept facing inside, thereby giving a multilayer container having a predetermined shape. Vacuum forming, pressure forming, plug-assisted forming or the like is applicable to the forming method. On the other hand, using extruders corresponding to the constitutive layers of an oxygen-permeable layer (A), an oxygen-absorbing layer (B) and a gas-barrier layer (D), the materials to constitute the individual layers may be melt-kneaded, then the resulting hollow parison may be melt-extruded through a circular die, and blow-molded in a mold to give a deoxidant multilayer container. The molding temperature in this case may be selected within a range of 160°C to 175°C, when a polyamide (X) having a specific composition is used as the gas-barrier resin, and the forming operation may be attained within a relatively low temperature range. Heating for container formation may be carried out in a mode of contact heating or noncontact heating. By contact heating, the temperature profile to generate in the deoxidant multilayer body may be reduced as much as possible, and therefore outward failure of containers such as uneven stretching of each layer may be reduced.

The multilayer container of the present invention is excellent in oxygen barrier performance and oxygen absorbing capability, and is also excellent in flavor retaining performance for contents thereof, and thus the container is suitable for packaging various articles.

Examples of the articles to be stored in the multilayer container of the present invention include various articles, for example, beverages, such as milk, milk products, juice, coffee, tea beverages and alcohol beverages; liquid seasonings, such as Worcester sauce, soy sauce and dressing; cooked foods, such as soup, stew, curry, infant cooked foods and nursing care cooked foods; paste foods, such as jam, mayonnaise, ketchup and jelly; processed seafood, such as tuna and other seafood; processed milk products, such as cheese and butter; processed meat products, such as dressed meat, salami, sausage and ham; vegetables, such as carrot and potato; egg; noodles; processed rice products, such as uncooked rice, cooked rice and rice porridge; dry foods, such as powder seasonings, powder coffee, infant powder milk, powder diet foods, dried vegetables and rice crackers; chemicals, such as agrichemicals and insecticides; medical drugs; cosmetics; pet foods; and sundry articles, such as shampoo, conditioner and cleanser. Among these, the container is favorably used for articles to be subjected to a heat sterilization treatment, such as a boiling treatment and a retort treatment, for example, jelly containing fruit pulp, fruit juice, coffee or the like, yokan (sweet bean jelly), cooked rice, processed rice, prepared foods for infants, prepared foods for nursing care, curry, soup, stew, jam, mayonnaise, ketchup, pet foods, processed seafood and the like.

Furthermore, before or after charging the article to be stored, the packaging container formed of the multilayer formed body and/or of the article to be stored may be subjected to sterilization in the form suitable for the article to be stored. Examples of the sterilization method include heat sterilization, such as a hydrothermal treatment (boiling treatment) at 100°C or lower, a pressurized hydrothermal treatment (retort treatment) at 100°C or higher, and an ultrahigh temperature heat treatment at 130°C or higher; electromagnetic wave sterilization with ultraviolet rays, microwaves or gamma waves; gas treatment, with ethylene oxide gas or the like; and chemical sterilization with hydrogen peroxide, hypochlorous acid or the like.

EXAMPLES

The present invention will be described in more detail with reference to the following Examples, but the present invention is not limited to these Examples.

Production Example 1

(Production of Polyamide Resin X1)

15,000 g (102.6 mol) of adipic acid (AdA) (manufactured by Asahi Kasei Corp.) and 1,088 g (6.6 mol) of isophthalic acid (IPA) (manufactured by AG International Chemical Company, Inc.) were put into a jacketed 50-L reactor equipped with a stirrer, a partial condenser, a cooler, a thermometer, a dropping tank and a nitrogen gas inlet tube, and sodium hypophosphite monohydrate was put thereinto so that the phosphorus concentration could be 300 ppm relative to the polymer yield and sodium acetate was put thereinto so that the sodium concentration could be 401 ppm relative to the polymer yield. The polymerization device was fully purged with nitrogen, and then heated up to 170°C in a nitrogen stream atmosphere to make the dicarboxylic acid fluidized, and 14,792 g (108.6 mol) of metaxylylenediamine (MXDA) (manufactured by Mitsubishi Gas Chemical Company, Inc.) was dropwise added thereto with stirring. During this, the inner temperature was continuously raised up to 245°C, and water distilled along with the dropwise addition of metaxylylenediamine was removed out of the system via the partial condenser and the cooler. After the dropwise addition of metaxylylenediamine, the inner temperature was continuously raised up to 255°C and the reaction was continued for 15 minutes. Subsequently, the inner pressure in the reaction system was continuously reduced down to 600 mmHg over 10 minutes, and then the reaction was continued for 40 minutes. During this, the reaction temperature was continuously raised up to 260°C. After the reaction, the reactor was pressurized up to 0.2 MPa with nitrogen gas so that the polymer was taken out as strands through the nozzle at the bottom of the polymerization reactor, then cooled with water and cut into pellets of a polyamide resin X1.

Production Example 2

(Production of Polyamide Resin X2)

The pellets of the polyamide resin X1 obtained in Production Example 1 were dry-blended with 400 ppm of a lubricant, calcium stearate (manufactured by NOF Corporation) added thereto, using a tumbler, thereby giving pellets of a polyamide resin X2.

Production Example 3

(Production of Polyamide Resin X3)

Pellets of a polyamide resin X3 were produced in the same manner as in Production Example 1, except that the molar ratio relative to 100 mol% of the total of the dicarboxylic acid component was changed to 90 mol% of adipic acid and 10 mol% of isophthalic acid.

Production Example 4

(Production of Polyamide Resin X4)

Pellets of a polyamide resin X4 were produced in the same manner as in Production Example 1, except that the molar ratio relative to 100 mol% of the total of the dicarboxylic acid component was changed to 96 mol% of adipic acid and 4 mol% of isophthalic acid.

Production Example 5

(Production of Polyamide Resin X5)

Pellets of a polyamide resin X5 were produced in the same manner as in Production Example 1, except that the molar ratio relative to 100 mol% of the total of the dicarboxylic acid component was changed to 85 mol% of adipic acid and 15 mol% of isophthalic acid.

Production Example 6

(Production of Polyamide Resin X6)

Pellets of a polyamide resin X6 were produced in the same manner as in Production Example 1, except that the molar ratio relative to 100 mol% of the total of the dicarboxylic acid component was changed to 80 mol% of adipic acid and 20 mol% of isophthalic acid.

Production Example 7

(Production of Polyamide Resin X7)

Pellets of a polyamide resin X7 were produced in the same manner as in Production Example 1, except that isophthalic acid was not added and the molar ratio relative to 100 mol% of the total of the diamine component was changed to 100 mol% of metaxylylenediamine and the molar ratio relative to 100 mol% of the total of the dicarboxylic acid component was changed to 100 mol% of adipic acid.

The relative viscosity, the terminal group concentration, the glass transition temperature, the melting point and the semi-crystallization time of the polyamide resins obtained in Production Examples 1 to 7 were measured according to the methods mentioned below. The polyamide resins obtained in Production Examples 1 to 7 were individually formed into an unstretched film having a thickness of 50 $\mu$m, and the oxygen penetration coefficient thereof was measured according to the method mentioned below. The results are shown in Table 1.

(1) Relative Viscosity

0.2 g of a pellet sample was precisely weighed and dissolved in 20 mL of 96% sulfuric acid at 20 to 30°C under stirring. After completely dissolved, 5 mL of the solution was quickly placed in a Cannon-Fenske viscometer, which was then allowed to stand in a thermostat chamber at 25°C for 10 minutes, and then the fall time (t) was measured. The fall time ($t_0$) of 96% sulfuric acid itself was measured in the same manner. The relative viscosity was calculated from t and $t_0$ according to the following expression.

$$\text{Relative viscosity} = t/t_0$$

(2) Terminal Group Concentration in Polyamide Resin

(a) Terminal Amino Group Concentration ([$NH_2$] mmol/kg)

0.5 g of the polyamide resin was precisely weighed and dissolved in 30 mL of a solution of phenol/ethanol = 4/1 by volume under stirring. After the polyamide was completely dissolved, the solution was subjected to neutralization titration with N/100 hydrochloric acid, thereby measuring the terminal amino group concentration.

(b) Terminal Carboxyl Group Concentration ([COOH] mmol/kg)

0.5 g of the polyamide resin was precisely weighed and dissolved in 30 mL of benzyl alcohol in a nitrogen stream atmosphere at 160 to 180°C. After the polyamide was completely dissolved, the solution was cooled down to 80°C in a nitrogen stream atmosphere and, with stirring, 10 mL of methanol was added and subjected to neutralization titration with an aqueous N/100 sodium hydroxide solution, thereby measuring the terminal carboxyl group concentration.

(3) Glass Transition Temperature and Melting Point

DSC measurement (differential scanning calorimeter measurement) was performed with a differential scanning calorimeter ("DSC-60", manufactured by Shimadzu Corporation) at a heating rate of 10°C/min in a nitrogen stream atmosphere, thereby measuring the glass transition temperature (Tg) and the melting point (Tm).

(4) Semi-Crystallization Time

First, an unstretched film formed of the polyamide resin having a thickness of 100 $\mu$m was prepared. As a device, a semi-crystallization time analyzer (Model: MK701, manufactured by Kotaki Seisakusho Co., Ltd.) was used. Next, five sheets of the polyamide resin film having a thickness of 100 $\mu$m were laid one on top of another, then melted in a hot air atmosphere at 260°C for 3 minutes, thereafter immersed in an oil bath at 160°C, and the light transmittance change up to the end of crystallization was measured. A half of the time for the light transmittance change until the end of crystallization (semi-crystallization time) was measured according to a depolarization light intensity method.

(5) Oxygen Transmission Coefficient of Unstretched Film

The oxygen transmission coefficient of the unstretched film formed of the polyamide resin was measured according to ASTM D3985. Concretely, as a sample, an unstretched film formed of the polyamide resin having a thickness of 50 $\mu$m was prepared. Using an oxygen transmittance rate measuring device ("OX-TRAN 2/61" manufactured by Mocon Inc.), the oxygen transmission rate of the unstretched film in an environment at 23°C and 60% RH was measured.

(6) Measurement of Mean Particle Size and Maximum Particle Size of Iron Powder

Using a laser diffraction scattering type particle sizer "SK Laser Micron Sizer LMS-2000e" (manufactured by Seishin Enterprise Co., Ltd.), the mean particle size and the maximum particle size of iron powder were measured.

Table 1

| Polyamide No | | | | X1 | X2 | X3 | X4 | X5 | X6 | X7 |
|---|---|---|---|---|---|---|---|---|---|---|
| Additive | calcium stearate (lubricant) | | ppm | 0 | 400 | 0 | 0 | 0 | 0 | 0 |
| Monomer Composition | metaxylylenediamine (MXDA) | | mol% *1 | 100 | 100 | 100 | 100 | 100 | 100 | 100 |
| | adipic acid (AdA) | | mol% *2 | 94 | 94 | 90 | 96 | 85 | 80 | 100 |
| | isophthalic acid (IPA) | | mol% *3 | 6 | 6 | 10 | 4 | 15 | 20 | 0 |
| Properties | Relative Viscosity | | | 2.7 | 2.7 | 2.7 | 2.7 | 2.7 | 2.7 | 2.7 |
| | Terminal Group Concentration | [NH$_2$] | mmol/kg | 19 | 19 | 20 | 19 | 21 | 21 | 20 |
| | | [COOH] | mmol/kg | 63 | 63 | 63 | 63 | 62 | 62 | 60 |
| | Thermal Properties | glass transition temperature Tg | °C | 92 | 92 | 94 | 88 | 99 | 102 | 87 |
| | | melting point Tm | °C | 229 | 229 | 221 | 232 | 215 | N.D. | 237 |
| | Semi-crystallization time | | sec | 92 | 92 | 198 | 80 | 630 | >2000 | 35 |
| | Oxygen Transmission Coefficient of Unstretched Film 23°C 60% RH | | mL·mm /m$^2$·day·atm | 0.072 | 0.072 | 0.070 | 0.082 | 0.068 | 0.072 | 0.090 |

*1: Ratio in diamine unit 100 mol%
*2,*3: Ratio in dicarboxylic acid unit 100 mol% N.D.: Not Detected.

Example 1

Iron powder (mean particle size: 0.1 mm, maximum particle size: 0.3 mm) was put into a vacuum mixing drier equipped with a heating jacket, and while heated and dried at 130°C under a reduced pressure of 10 mmHg, 2 parts by mass of a mixed aqueous solution of calcium chloride/water = 1/1 (ratio by mass) relative to 100 parts by mass of the iron powder was sprayed thereover to prepare a deoxidant composition of iron powder coated with calcium chloride.

Next, using a 32 mmφ unidirectionally-rotating twin-screw extruder, calcium oxide (mean particle size: 10 μm, maximum particle size: 50 μm) and homopolypropylene ("Novatec PP FY6" manufactured by Japan Polypropylene Corporation) were kneaded in 50/50 (ratio by mass), extruded out as strands, cooled with a blower-equipped net belt, and cut with a strand cutter into pellets of a calcium oxide-added resin composition.

Similarly, using a 32 mmφ unidirectionally-rotating twin-screw extruder, a phenolic antioxidant ("Irganox 1330" manufactured by BASF, chemical name: 1,3,5-trimethyl-2,4,6-tris(3,5-di-t-butyl-4-hydroxybenzyl)benzene), a phosphorus antioxidant ("Irgafos 168" manufactured by BASF, chemical name: tris(2,4-di-t-butylphenyl) phosphite) and homopolypropylene ("Novatec PP FY6" manufactured by Japan Polypropylene Corporation) were kneaded in 0.1/0.1/99.8 (ratio by mass), extruded out as strands, cooled with a blower-equipped net belt, and cut with a strand cutter into pellets of an antioxidant-added resin composition.

Subsequently, using a 32 mmφ unidirectionally-rotating twin-screw extruder, the above-mentioned deoxidant composition, homopolypropylene ("Novatec PP FY6" manufactured by Nippon Polypropylene Corporation), the calcium oxide-added resin composition pellets and the antioxidant-added resin composition pellets were kneaded in 60/36/3/1 (ratio by mass), extruded out as strands, cooled with a blower-equipped net belt, and cut with a strand cutter into pellets of an oxygen-absorbing resin composition.

Next, using a multilayer sheet molding apparatus including 1st to 5th, 40 mmφ extruders, a feed block, a T-die, a cooling roll and a sheet take-up unit, the polyamide X1 obtained in Production Example 1 was extruded out through the first extruder, a dry blend of the above-mentioned oxygen-absorbing resin composition and homopolypropylene ("Novatec PP FY6" manufactured by Japan Polypropylene Corporation in 50/50 (ratio by mass) was through the second extruder, a dry blend of homopolypropylene ("Novatec PP FY6" manufactured by Japan Polypropylene Corporation) and titanium oxide 60%-containing polypropylene-base white master batch (manufactured by Tokyo Ink Co., Ltd.) in 90/10 (ratio by mass) was through the third and fifth extruders, and maleic anhydride-modified polypropylene ("Modic P604V" manufactured by Mitsubishi Chemical Corporation) was through the 4th extruder to prepare a multilayer sheet (deoxidant multilayer body). The layer configuration of the multilayer sheet is composed of oxygen-permeable layer (A) (PP, inner layer)/oxygen-absorbing layer (B)/adhesive layer (C) (AD)/gas-barrier layer (D)/adhesive layer (E) (AD)/oxygen-absorbing layer (F)/protective layer (G) (PP, outer layer). The resultant sheet was thermoformed with the inner layer side thereof kept facing inward to produce a 4-kind 7-layer multilayer container shown in Table 2.

The total thickness and the ratio of each layer of the multilayer container were measured by cutting the multilayer container with a cutter, and analyzing the cross section with an optical microscope. Concretely, two points in the center of the side and two pints in the center of the bottom of the multilayer container, totaling 4 points, were analyzed for the container thickness (total thickness) and the thickness of each layer at each point. At every point, the thickness ratio of each layer to the total thickness was obtained, and the mean value was calculated. Each thickness ratio at the four points measured fell within a range of ±3% of the mean value. In particular, in the multilayer container of the present invention, the ratio of each layer satisfied the predetermined numerical range at every measurement point.

Examples 2 to 13, 15 and 16, and Comparative Examples 1 to 3, 6 and 7

Four-kind 7-layer multilayer containers shown in Table 2 were produced in the same manner as in Example 1 except that the kind of the polyamide resin (X), the ratio by mass of deoxidant composition/resin, the total thickness of multilayer container and the thickness ratio of each layer to the total thickness of multilayer container were changed as shown in Table 2.

Example 14

A 4-kind 7-layer multilayer container shown in Table 2 was produced in the same manner as in Example 1, except that a dry blend of the above-mentioned oxygen-absorbing resin composition and pellets of a recycled homopolypropylene-based material in 50/50 (ratio by mass) was used as the material to be extruded out through the second extruder. The pellets of the recycled homopolypropylene-based material are those prepared by grinding the waste in sheet molding and thermoforming in Example 1, then again melting it, extruding into strands and pelletizing them.

Comparative Example 4

A 4-kind 7-layer multilayer container shown in Table 2 was produced in the same manner as in Example 1, except that, in place of the polyamide resin (X), a mixed resin of 80% by mass of polymetaxylyleneadipamide ("MX Nylon 6007" manufactured by Mitsubishi Gas Chemical Company, Inc.) and 20% by mass of polyhexamethyleneterephthalamide/ polyhexamethyleneisophthalamide copolymer ("Novamid X21" manufactured by Mitsubishi Engineering Plastics Corporation) was used.

Comparative Example 5

Using a multilayer sheet molding apparatus including first to fifth extruders, a feed block, a T-die, a cooling roll and a sheet take-up unit but not using an oxygen-absorbing resin composition, the polyamide X2 obtained in Production Example 2 was extruded out through the first extruder, a dry blend of homopolypropylene ("Novatec PP FY6" manufactured by Japan Polypropylene Corporation) and titanium oxide 60%-containing polypropylene-base white master batch (manufactured by Tokyo Ink Co., Ltd.) in 90/10 (ratio by mass) was through the second, third and fifth extruders, and maleic anhydride-modified polypropylene ("Modic P604V" manufactured by Mitsubishi Chemical Corporation) was through the fourth extruder to produce a multilayer sheet (deoxidant multilayer body). The layer configuration of the multilayer sheet is composed of oxygen-permeable layer (A) (PP, inner layer)/adhesive layer (C) (AD)/gas-barrier layer (D)/adhesive layer (E) (AD)/protective layer (G) (PP, outer layer). The resultant sheet was thermoformed with the inner layer side thereof kept facing inward to produce 3-kind 5-layer multilayer containers shown in Table 2.
The total thickness and the ratio of each layer of the multilayer container were measured in the same manner as in Example 1.

Example 17

Using a multilayer sheet molding apparatus including first to fourth extruders, a feed block, a T-die, a cooling roll and a sheet take-up unit, the polyamide X1 obtained in Production Example 1 was extruded out through the first extruder, a dry blend of the above-mentioned oxygen-absorbing resin composition and homopolypropylene ("Novatec PP FY6" manufactured by Japan Polypropylene Corporation) in 50/50 (ratio by mass) was through the second extruder, a dry blend of homopolypropylene ("Novatec PP FY6" manufactured by Japan Polypropylene Corporation) and titanium oxide 60%-containing polypropylene-base white master batch (manufactured by Tokyo Ink Co., Ltd.) in 90/10 (ratio by mass) was through the third extruder, and maleic anhydride-modified polypropylene ("Modic P604V" manufactured by Mitsubishi Chemical Corporation) was through the fourth extruder to produce a multilayer sheet (deoxidant multilayer body). The layer configuration of the multilayer sheet is composed of oxygen-permeable layer (A) (PP, inner layer)/oxygen-absorbing layer (B)/adhesive layer (C) (AD)/gas-barrier layer (D)/adhesive layer (E) (AD)/oxygen-absorbing layer (F) (outer layer). The resultant sheet was thermoformed with the inner layer side thereof kept facing inward to produce 4-kind 6-layer multilayer containers shown in Table 3.
The total thickness and the ratio of each layer of the multilayer container were measured in the same manner as in Example 1.

Example 18

A 4-kind 6-layer multilayer container shown in Table 3 was produced in the same manner as in Example 17, except that the thickness ratio of the oxygen-absorbing layer (A), the thickness ratio of the oxygen-permeable layer (B) and the thickness ratio of the oxygen-absorbing layer (F) were changed as shown in Table 3.

Example 19 (Reference Example)

Using a multilayer sheet molding apparatus including first to fifth extruders, a feed block, a T-die, a cooling roll and a sheet take-up unit, the polyamide X1 obtained in Production Example 1 was extruded out through the first extruder, a dry blend of the above-mentioned oxygen-absorbing resin composition and homopolypropylene ("Novatec PP FY6" manufactured by Japan Polypropylene Corporation) in 50/50 (ratio by mass) was through the second extruder, a dry blend of homopolypropylene ("Novatec PP FY6" manufactured by Japan Polypropylene Corporation) and titanium oxide 60%-containing polypropylene-base white master batch (manufactured by Tokyo Ink Co., Ltd.) in 90/10 (ratio by mass) was through the third and fifth extruders, and maleic anhydride-modified polypropylene ("Modic P604V" manufactured by Mitsubishi Chemical Corporation) was through the fourth extruder to produce a multilayer sheet (deoxidant multilayer body). The layer configuration of the multilayer sheet is composed of oxygen-permeable layer (A) (PP, inner layer)/oxygen-absorbing layer (B)/adhesive layer (C) (AD)/gas-barrier layer (D)/adhesive layer (E) (AD)/protective layer (G) (PP, outer layer). The resultant sheet was thermoformed with the inner layer side thereof kept facing inward to produce 4-kind 6-layer multilayer containers shown in Table 4.

The total thickness and the ratio of each layer of the multilayer container were measured in the same manner as in Example 1.

Examples 20 to 33 (Reference Examples), and Comparative Examples 8 to 10, 13 and 14

Four-kind 6-layer multilayer containers shown in Table 4 were produced in the same manner as in Example 19, except that the kind of the polyamide resin (X), the ratio by mass of deoxidant composition/resin, the layer thickness of the sheet, the thickness ratio of the gas-barrier layer, the thickness ratio of the oxygen-absorbing layer and the thickness ratio of the oxygen-permeable layer were changed as shown in Table 4.

Comparative Example 11

A 4-kind 6-layer multilayer container shown in Table 4 was produced in the same manner as in Example 19, except that, in place of the polyamide resin (X), a mixed resin of 80% by mass of polymetaxylyleneadipamide ("MX Nylon 6007" manufactured by Mitsubishi Gas Chemical Company, Inc.) and 20% by mass of polyhexamethyleneterephthalamide/ polyhexamethyleneisophthalamide copolymer ("Novamid X21" manufactured by Mitsubishi Engineering Plastics Corporation) was used.

Comparative Example 12

Using a multilayer sheet molding apparatus including first to third extruders, a feed block, a T-die, a cooling roll and a sheet take-up unit but not using an oxygen-absorbing resin composition, the polyamide X2 obtained in Production Example 2 was extruded out through the first extruder, a dry blend of homopolypropylene ("Novatec PP FY6" manufactured by Japan Polypropylene Corporation) and titanium oxide 60%-containing polypropylene-base white master batch (manufactured by Tokyo Ink Co., Ltd.) in 90/10 (ratio by mass) was through the second extruder, and maleic anhydride-modified polypropylene ("Modic P604V" manufactured by Mitsubishi Chemical Corporation) was through the third extruder to produce a multilayer sheet (deoxidant multilayer body). The layer configuration of the multilayer sheet is composed of oxygen-permeable layer (A) (PP, inner layer)/adhesive layer (C) (AD)/gas-barrier layer (D)/adhesive layer (E) (AD)/protective layer (G) (PP, outer layer). The resultant sheet was thermoformed with the inner layer side thereof kept facing inward to produce 3-kind 5-layer multilayer containers shown in Table 4.

The total thickness and the ratio of each layer of the multilayer container were measured in the same manner as in Example 1.

The multilayer containers produced in Examples and Comparative Examples were evaluated in point of the appearance of the container, the oxygen transmission rate and the L-ascorbic acid remaining ratio, in the manner as below. The results are shown in Tables 2 to 4.

(1) Appearance of Container

Immediately after molding into containers, the appearance of each container was visually checked.

    A: The inner surface and the outside of the container were smooth.
    B: Roughness caused by iron powder was seen in the inner surface and on the outside of the container. Alternatively, the container deformed.

(2) Oxygen Transmission Rate

The multilayer container was measured for the oxygen transmission rate with an oxygen permeability measuring apparatus ("OX-TRAN 2/61" manufactured by Mocon, Inc.) according to ASTM D3985. First, the multilayer container produced in Examples and Comparative Examples was subjected to retort treatment at 121°C for 30 minutes, using an autoclave ("SR-240" manufactured by Tomy Seiko Co., Ltd.). Subsequently, 30 mL of distilled water was charged in the container, which was then hot-sealed with an aluminum foil laminate film to seal up the open spout. Two holes were formed in the aluminum foil-laminated film at the opening, through which copper tubes were inserted and fixed and sealed up with an epoxy resin-based adhesive ("Bond Quick Set" manufactured by Konishi Co., Ltd.). Subsequently, under the condition at a temperature of 23°C, a humidity outside the container of 50% RH and a humidity inside the container of 100% RH, this was stored for 12 hours, 3 days, 30 days and 60 days, and the oxygen transmission rate was measured after each storage.

(3) L-Ascorbic Acid Remaining Ratio

80 mL of a 10% L-ascorbic acid aqueous solution was charged in the multilayer container from the open spout thereof, and the open spout was sealed up by heat-fusing with an aluminum foil-laminated film. The container was subjected to retort treatment at 121°C for 30 minutes by using an autoclave ("SR-240" manufactured by Tomy Seiko Co., Ltd.), and the container was stored in an atmosphere at 23°C and 50% RH for three months.

Next, the content liquid was taken out, and 10 mL of the content liquid was placed in a tall beaker with a capacity of 100 mL, to which 5 mL of a mixed aqueous solution of metaphosphoric acid and acetic acid and 40 mL of distilled water were added. The solution was titrated with a 0.05 mol/L iodine solution as a titrant by an inflexion point detection method with a potentiometric titrator, and the L-ascorbic acid remaining ratio was obtained from the result thereof.

A higher L-ascorbic acid remaining ratio means that the container is excellent in suppressing oxidative degradation of the content thereof.

Table 2

| | Polyamide Resin (X) | Blend Ratio of Deoxidant Composition/ Thermoplastic Resin | Multilayer Configuration *1 | Total Thickness of Sheet | Ratio of Protective Layer (G) | Ratio of Oxygen-Absorbing Layer (F) | Ratio of Adhesive Layer (E) | Ration of Gas-Barrier Layer (D) | Ratio of Adhesive Layer (C) | Ratio of Oxygen-Absorbing Layer (B) | Ratio of Oxygen-Permeable Layer (A) | Total of Layer Ratio | Appearance of Container | Oxygen Transmission Rate *2 (mL/0.21 atm·day·package) | | | | L-Ascorbic Acid Remaining Ratio *3 |
|---|---|---|---|---|---|---|---|---|---|---|---|---|---|---|---|---|---|---|
| | | | | mm | % | % | % | % | % | % | % | % | | 12 hr | 3 day | 30 day | 60 day | % |
| Example 1 | X1 | 30/70 | A1 | 1 | 17 | 20 | 6 | 6 | 6 | 20 | 25 | 100 | A | 0.000 | 0.000 | 0.000 | 0.000 | 90 |
| Example 2 | X2 | 30/70 | A1 | 1 | 18 | 20 | 5 | 6 | 6 | 20 | 25 | 100 | A | 0.000 | 0.000 | 0.000 | 0.000 | 91 |
| Example 3 | X3 | 30/70 | A1 | 1 | 18 | 20 | 5 | 6 | 6 | 20 | 25 | 100 | A | 0.000 | 0.000 | 0.000 | 0.000 | 91 |
| Example 4 | X2 | 30/70 | A1 | 1 | 17 | 20 | 5 | 10 | 5 | 20 | 23 | 100 | A | 0.000 | 0.000 | 0.000 | 0.000 | 92 |
| Example 5 | X2 | 30/70 | A1 | 1 | 18 | 20 | 5 | 15 | 5 | 20 | 17 | 100 | A | 0.000 | 0.000 | 0.000 | 0.000 | 94 |
| Example 6 | X2 | 30/70 | A1 | 1 | 31 | 10 | 5 | 6 | 5 | 10 | 33 | 100 | A | 0.000 | 0.000 | 0.000 | 0.000 | 89 |
| Example 7 | X2 | 10/90 | A1 | 1 | 20 | 20 | 6 | 6 | 6 | 20 | 22 | 100 | A | 0.000 | 0.000 | 0.000 | 0.000 | 89 |
| Example 8 | X2 | 20/80 | A1 | 1 | 22 | 20 | 6 | 6 | 5 | 20 | 21 | 100 | A | 0.000 | 0.000 | 0.000 | 0.000 | 90 |
| Example 9 | X2 | 40/60 | A1 | 1 | 19 | 20 | 5 | 6 | 6 | 20 | 24 | 100 | A | 0.000 | 0.000 | 0.000 | 0.000 | 93 |
| Example 10 | X2 | 30/70 | A1 | 0.5 | 23 | 20 | 5 | 6 | 5 | 20 | 21 | 100 | A | 0.003 | 0.002 | 0.002 | 0.002 | 84 |
| Example 11 | X2 | 30/70 | A1 | 0.75 | 20 | 20 | 5 | 6 | 6 | 20 | 23 | 100 | A | 0.002 | 0.001 | 0.001 | 0.001 | 88 |
| Example 12 | X2 | 30/70 | A1 | 1.2 | 22 | 20 | 5 | 6 | 5 | 20 | 22 | 100 | A | 0.000 | 0.000 | 0.000 | 0.000 | 92 |
| Example 13 | X2 | 30/70 | A1 | 1.5 | 22 | 20 | 5 | 6 | 5 | 20 | 22 | 100 | A | 0.000 | 0.000 | 0.000 | 0.000 | 93 |
| Example 14 | X2 | 30/70 | B1 | 1 | 21 | 20 | 5 | 6 | 5 | 20 | 23 | 100 | A | 0.000 | 0.000 | 0.000 | 0.000 | 87 |
| Example 15 | X4 | 30/70 | A1 | 1 | 21 | 20 | 5 | 6 | 5 | 20 | 23 | 100 | A | 0.000 | 0.000 | 0.000 | 0.000 | 84 |

EP 3 078 491 B1

EP 3 078 491 B1

| | Polya-mide Resin (X) | Blend Ratio of Deoxi-dant Com-position/ Thermo-plastic Res-in | Multilayer Configura-tion *1 | Total Thick-ness of Sheet | Ratio of Protec-tive Lay-er (G) | Ratio of Oxygen-Absorb-ingLayer (F) | Ratio of Adhe-sive Layer (E) | Ra-tion of Gas-Barri-er Layer (D) | Ratio of Adhesive Layer (C) | Ratio of Oxygen-Absorb-ingLayer (B) | Ratio of Oxygen-Permeable Layer (A) | Total of Lay-er Ratio | Appear-ance of Container | Oxygen Transmission Rate *2 (mL/0.21 atm·day·package) | | | | L-Ascor-bic Acid Remain-ing Ratio *3 |
|---|---|---|---|---|---|---|---|---|---|---|---|---|---|---|---|---|---|---|
| | | | | mm | % | % | % | % | % | % | % | % | | 12 hr | 3 day | 30 day | 60 day | % |
| Example 16 | X5 | 30/70 | A1 | 1 | 21 | 20 | 5 | 6 | 5 | 20 | 23 | 100 | A | 0.004 | 0.003 | 0.003 | 0.003 | 81 |
| Compara-tive Exam-ple 1 | X2 | 30/70 | A1 | 1 | 34 | 20 | 5 | 6 | 5 | 20 | 10 | 100 | B | Unevaluated owing to appearance failure. | | | | |
| Compara-tive Exam-ple 2 | X2 | 30/70 | A1 | 1 | 38 | 3 | 5 | 6 | 5 | 3 | 40 | 100 | A | 0.011 | 0.008 | 0.003 | 0.003 | 75 |
| Compara-tive Exam-ple 3 | X2 | 30/70 | A1 | 1 | 8 | 35 | 4 | 6 | 4 | 35 | 8 | 100 | B | Unevaluated owing to appearance failure. | | | | |
| Compara-tive Exam-ple 4 | Mixed Resin *4 | 30/70 | A1 | 1 | 20 | 20 | 5 | 6 | 5 | 20 | 24 | 100 | A | 0.011 | 0.006 | 0.004 | 0.004 | 73 |
| Compara-tive Exam-ple 5 | X2 | none | C1 | 1 | 40 | none | 5 | 10 | 5 | none | 40 | 100 | A | 0.012 | 0.008 | 0.003 | 0.003 | 73 |
| Compara-tive Exam-ple 6 | X6 | 30/70 | A1 | 1 | 18 | 20 | 5 | 6 | 6 | 20 | 25 | 100 | A | 0.012 | 0.006 | 0.004 | 0.003 | 74 |

(continued)

| | Polya-mide Resin (X) | Blend Ratio of Deoxi-dant Com-position/ Thermo-plastic Res-in | Multilayer Configura-tion *1 | Total Thick-ness of Sheet | Ratio of Protec-tive Lay-er (G) | Ratio of Oxygen-Absorbing Layer (F) | Ratio of Adhe-sive Layer (E) | Ra-tion of Gas-Barri-er Layer (D) | Ratio of Adhesive Layer (C) | Ratio of Oxygen-Absorbing Layer (B) | Ratio of Oxygen-Permeable Layer (A) | Total of Lay-er Ratio | Appear-ance of Container | Oxygen Transmission Rate *2 (mL/0.21 atm·day·package) | | | L-Ascor-bic Acid Remain-ing Ratio *3 |
|---|---|---|---|---|---|---|---|---|---|---|---|---|---|---|---|---|---|
| | | | | mm | % | % | % | % | % | % | % | % | | 12 hr | 3 day | 30 day 60 day | % |
| Compara-tive Exam-ple 7 | X7 | 30/70 | A1 | 1 | 19 | 20 | 5 | 6 | 5 | 21 | 24 | 100 | B | Unevaluated owing to appearance failure. | | | |

*1 Layer Configuration
A1 (outer layer) PP/oxygen-absorbing layer/AD/polyamide layer/AD/oxygen-absorbing layer/PP (inner layer)
B1 (outer layer) PP/oxygen-absorbing layer (using recycled PP)/AD/polyamide layer/AD/oxygen-absorbing layer (using recycled PP)/PP (inner layer)
C1 (outer layer) PP/AD/polyamide layer/AD/PP (inner layer)
*2 After retort treatment at 121°C for 30 min, the container was measured at 23°C, at 50% RH outside the container and 100% RH inside the container.
*3 After retort treatment at 121°C for 30 min, the container was stored at 23°C and 50% RH for 3 months and then measured.
*4 Mixed resin (MX Nylon 6007/Novamid X21 = 80/20 (ratio by mass))

Table 3

| | Polyamide Resin (X) | Blend Ratio of Deoxidant Composition/Thermoplastic Resin | Multilayer Configuration *1 | Total Thickness of Sheet (mm) | Ratio of Oxygen-Absorbing Layer (F) % | Ratio of Adhesive Layer (E) % | Ration of Gas-Barrier Layer (D) % | Ratio of Adhesive Layer (C) % | Ratio of Oxygen-Absorbing Layer (B) % | Ratio of Oxygen-Permeable Layer (A) % | Total of Layer Ratio % | Appearance of Container | Oxygen Transmission Rate *2 (mL/0.21 atm·day·package) 12 hr | 3 day | 30 day | 60 day | L-Ascorbic Acid Remaining Ratio *3 % |
|---|---|---|---|---|---|---|---|---|---|---|---|---|---|---|---|---|---|
| Example 17 | X2 | 30/70 | A2 | 1 | 31 | 5 | 6 | 5 | 30 | 23 | 100 | A | 0.000 | 0.000 | 0.000 | 0.000 | 95 |
| Example 18 | X2 | 30/70 | A2 | 1 | 24 | 5 | 6 | 5 | 20 | 40 | 100 | A | 0.001 | 0.000 | 0.000 | 0.000 | 87 |

*1 Layer Configuration
A2 (outer layer) oxygen-absorbing layer/AD/polyamide layer/AD/oxygen-absorbing layer/PP (inner layer)
*2 After retort treatment at 121°C for 30 min, the container was measured at 23°C, at 50% RH outside the container and 100% RH inside the container.
*3 After retort treatment at 121°C for 30 min, the container was stored at 23°C and 50% RH for 3 months and then measured.

Table 4

| | Polyamide Resin (X) | Blend Ratio of Deoxidant Composition/ Thermoplastic Resin | Multilayer Configuration *1 | Total Thickness of Sheet (mm) | Ratio of Protective Layer (G) % | Ratio of Adhesive Layer (E) % | Ration of Gas-Barrier Layer (D) % | Ratio of Adhesive Layer (C) % | Ratio of Oxygen-Absorbing Layer (B) % | Ratio of Oxygen-Permeable Layer (A) % | Total of Layer Ratio % | Appearance of Container | 12 hr | 3 day | 30 day | 60 day | L-Ascorbic Acid Remaining Ratio *3 % |
|---|---|---|---|---|---|---|---|---|---|---|---|---|---|---|---|---|---|
| Example 19 | X1 | 30/70 | A3 | 1 | 45 | 6 | 6 | 6 | 20 | 17 | 100 | A | 0.003 | 0.002 | 0.002 | 0.002 | 89 |
| Example 20 | X2 | 30/70 | A3 | 1 | 46 | 5 | 6 | 6 | 20 | 17 | 100 | A | 0.003 | 0.002 | 0.002 | 0.002 | 87 |
| Example 21 | X3 | 30/70 | A3 | 1 | 45 | 6 | 6 | 6 | 20 | 17 | 100 | A | 0.003 | 0.002 | 0.002 | 0.002 | 88 |
| Example 22 | X2 | 30/70 | A3 | 1 | 39 | 6 | 10 | 7 | 20 | 18 | 100 | A | 0.003 | 0.002 | 0.002 | 0.002 | 91 |
| Example 23 | X2 | 30/70 | A3 | 1 | 36 | 6 | 15 | 6 | 20 | 17 | 100 | A | 0.002 | 0.002 | 0.002 | 0.002 | 93 |
| Example 24 | X2 | 30/70 | A3 | 1 | 56 | 6 | 6 | 6 | 10 | 16 | 100 | A | 0.004 | 0.003 | 0.002 | 0.002 | 87 |
| Example 25 | X2 | 30/70 | A3 | 1 | 36 | 5 | 6 | 6 | 30 | 17 | 100 | A | 0.002 | 0.002 | 0.002 | 0.002 | 94 |
| Example 26 | X2 | 10/90 | A3 | 1 | 46 | 6 | 6 | 5 | 20 | 17 | 100 | A | 0.004 | 0.003 | 0.002 | 0.002 | 88 |
| Example 27 | X2 | 20/80 | A3 | 1 | 44 | 6 | 6 | 6 | 20 | 18 | 100 | A | 0.003 | 0.002 | 0.002 | 0.002 | 87 |
| Example 28 | X2 | 40/60 | A3 | 1 | 45 | 6 | 6 | 5 | 20 | 18 | 100 | A | 0.002 | 0.002 | 0.002 | 0.002 | 96 |
| Example 29 | X2 | 30/70 | A3 | 0.5 | 46 | 5 | 6 | 5 | 20 | 18 | 100 | A | 0.008 | 0.004 | 0.004 | 0.004 | 80 |
| Example 30 | X2 | 30/70 | A3 | 0.75 | 44 | 6 | 6 | 6 | 20 | 18 | 100 | A | 0.006 | 0.003 | 0.003 | 0.003 | 83 |

*Oxygen Transmission Rate *2 (mL/0.21 atm·day·package) corresponds to the 12 hr, 3 day, 30 day, and 60 day columns.*

(continued)

| | Polyamide Resin (X) | Blend Ratio of Deoxidant Composition/Thermoplastic Resin | Multilayer Configuration *1 | Total Thickness of Sheet (mm) | Ratio of Protective Layer (G) % | Ratio of Adhesive Layer (E) % | Ration of Gas-Barrier Layer (D) % | Ratio of Adhesive Layer (C) % | Ratio of Oxygen-Absorbing Layer (B) % | Ratio of Oxygen-Permeable Layer (A) % | Total of Layer Ratio % | Appearance of Container | Oxygen Transmission Rate *2 (mL/0.21 atm·day·package) 12 hr | 3 day | 30 day | 60 day | L-Ascorbic Acid Remaining Ratio *3 % |
|---|---|---|---|---|---|---|---|---|---|---|---|---|---|---|---|---|---|
| Example 31 | X2 | 30/70 | A3 | 1.2 | 45 | 6 | 6 | 6 | 20 | 17 | 100 | A | 0.004 | 0.002 | 0.002 | 0.002 | 94 |
| Example 32 | X2 | 30/70 | A3 | 1.5 | 46 | 6 | 6 | 5 | 20 | 17 | 100 | A | 0.004 | 0.002 | 0.002 | 0.002 | 94 |
| Example 33 | X2 | 30/70 | A3 | 1 | 32 | 6 | 6 | 6 | 20 | 30 | 100 | A | 0.006 | 0.003 | 0.002 | 0.002 | 87 |
| Comparative Example 8 | X2 | 30/70 | A3 | 1 | 53 | 5 | 6 | 6 | 20 | 10 | 100 | B | Unevaluated owing to appearance failure. | | | | |
| Comparative Example 9 | X2 | 30/70 | A3 | 1 | 61 | 6 | 6 | 6 | 3 | 18 | 100 | A | 0.012 | 0.008 | 0.003 | 0.003 | 75 |
| Comparative Example 10 | X2 | 30/70 | A3 | 1 | 7 | 5 | 6 | 5 | 60 | 17 | 100 | B | Unevaluated owing to appearance failure. | | | | |
| Comparative Example 11 | Mixed Resin *4 | 30/70 | A3 | 1 | 45 | 6 | 6 | 6 | 20 | 17 | 100 | A | 0.016 | 0.007 | 0.005 | 0.005 | 69 |
| Comparative Example 12 | X2 | none | C3 | 1 | 38 | 6 | 10 | 6 | none | 40 | 100 | A | 0.012 | 0.008 | 0.003 | 0.003 | 73 |
| Comparative Example 13 | X6 | 30/70 | A3 | 1 | 42 | 6 | 6 | 6 | 21 | 19 | 100 | A | 0.011 | 0.008 | 0.004 | 0.003 | 71 |

(continued)

| | Polyamide Resin (X) | Blend Ratio of Deoxidant Composition/ Thermoplastic Resin | Multilayer Configuration *1 | Total Thickness of Sheet | Ratio of Protective Layer (G) | Ratio of Adhesive Layer (E) | Ration of Gas-Barrier Layer (D) | Ratio of Adhesive Layer (C) | Ratio of Oxygen-Absorbing Layer (B) | Ratio of Oxygen-Permeable Layer (A) | Total of Layer Ratio | Appearance of Container | Oxygen Transmission Rate *2 (mL/0.21 atm·day·package) | | | | L-Ascorbic Acid Remaining Ratio *3 |
|---|---|---|---|---|---|---|---|---|---|---|---|---|---|---|---|---|---|
| | | | | mm | % | % | % | % | % | % | % | | 12 hr | 3 day | 30 day | 60 day | % |
| Comparative Example 14 | X7 | 30/70 | A3 | 1 | 43 | 6 | 6 | 6 | 20 | 19 | 100 | B | Unevaluated owing to appearance failure. | | | | |

*1 Layer Configuration
A3 (outer layer) PP/AD/polyamide layer/AD/oxygen-absorbing layer/PP (inner layer)
C3 (outer layer) PP/AD/polyamide layer/AD/PP (inner layer)
*2 After retort treatment at 121°C for 30 min, the container was measured at 23°C, at 50% RH outside the container and 100% RH inside the container.
*3 After retort treatment at 121°C for 30 min, the container was stored at 23°C and 50% RH for 3 months and then measured.
*4 Mixed resin (MX Nylon 6007/Novamid X21 = 80/20 (ratio by mass))

As shown in Table 2, in Comparative Examples 1 and 3 where the thickness ratio of the oxygen-permeable layer (A) relative to the multilayer container was too low, the strength was insufficient and the container deformed to cause appearance failure. In Comparative Example 2 where the thickness ratio of the oxygen-absorbing layer (B) was too low relative to the multilayer container, and in Comparative Example 5 not having an oxygen-absorbing layer (B), the oxygen-barrier performance and the oxygen absorbability were insufficient. In Comparative Example 4 using a mixed resin as the gas-barrier resin, the oxygen-barrier performance and the oxygen absorbability were insufficient since the polymetaxylyleneadipamide content as the gas-barrier resin was low. In Comparative Example 6 using the polyamide resin where the isophthalic acid unit was excessive, the oxygen-barrier performance and the oxygen absorbability were insufficient. In Comparative Example 7 using the polyamide resin not containing an isophthalic acid unit at all, the crystallization rate of the polyamide resin was too high and therefore the sheet was influenced by only a little fluctuation in the molding temperature therefore causing appearance failure such as stretching unevenness and thickness unevenness.

As opposed to these, the multilayer containers of the present invention of Examples 1 to 16 did not worsen in the appearance thereof on thermoforming and, in addition, from immediately after retort treatment, oxygen penetration into the containers after thermal sterilization can be effectively prevented, and therefore the containers have oxygen-barrier performance and oxygen absorbability favorable for food packaging materials that are required thermal sterilization treatment.

Also as shown in Table 3, the multilayer containers of the present invention of Examples 17 and 18 did not worsen in the appearance thereof on thermoforming and, in addition, from immediately after retort treatment, oxygen penetration into the containers after thermal sterilization can be effectively prevented, and therefore the containers have oxygen-barrier performance and oxygen absorbability favorable for food packaging materials that are required thermal sterilization treatment.

As shown in Table 4, in Comparative Example 8 where the thickness ratio of the oxygen-permeable layer (A) relative to the multilayer container was too low, the strength was insufficient and the container deformed to cause appearance failure. In Comparative Example 9 where the thickness ratio of the oxygen-absorbing layer (B) was too low relative to the multilayer container, and in Comparative Example 12 not having an oxygen-absorbing layer (B), the oxygen-barrier performance and the oxygen absorbability were insufficient. In Comparative Example 10 where the thickness ratio of the oxygen-absorbing layer (B) relative to the multilayer container was too high, the molding workability into containers was poor therefore causing appearance failure. In Comparative Example 11 using a mixed resin as the gas-barrier resin, the oxygen-barrier performance and the oxygen absorbability were insufficient since the polymetaxylyleneadipamide content as the gas-barrier resin was low. In Comparative Example 13 using the polyamide resin where the isophthalic acid unit was excessive, the oxygen-barrier performance and the oxygen absorbability were insufficient. In Comparative Example 14 using the polyamide resin not containing an isophthalic acid unit at all, the crystallization rate of the polyamide resin was too high and therefore the sheet was influenced by only a little fluctuation in the molding temperature therefore causing appearance failure such as stretching unevenness and thickness unevenness.

As opposed to these, the multilayer containers of the present invention of Examples 19 to 33 (reference examples) did not worsen in the appearance thereof on thermoforming and, in addition, from immediately after retort treatment, oxygen penetration into the containers after thermal sterilization can be effectively prevented, and therefore the containers have oxygen-barrier performance and oxygen absorbability favorable for food packaging materials that are required thermal sterilization treatment.

INDUSTRIAL APPLICABILITY

The multilayer container of the present invention does not worsen in the appearance thereof on thermoforming and, in addition, from immediately after retort treatment, oxygen penetration into the container after thermal sterilization can be effectively prevented, and therefore the container has oxygen-barrier performance and oxygen absorbability favorable for food packaging materials that are required thermal sterilization treatment. The multilayer container of the present invention gives consumers improved convenience of alternatives to canned products, and the industrial value thereof is extremely high.

Claims

1. A multilayer container comprising, as layered in that order from an inner layer to an outer layer, an oxygen-permeable layer (A) containing an oxygen-permeable resin as the main component thereof, an oxygen-absorbing layer (B) formed of an oxygen-absorbing resin composition containing a deoxidant composition and a thermoplastic resin, an adhesive layer (C) containing an adhesive resin as the main component thereof, and a gas-barrier layer (D) containing a gas-barrier resin as the main component thereof, wherein:

the gas-barrier resin is a polyamide resin (X) including a diamine unit containing a metaxylylenediamine unit in an amount of 70 mol% or more and a dicarboxylic acid unit containing 85 to 96 mol% of an $\alpha,\omega$-linear aliphatic dicarboxylic acid unit having 4 to 20 carbon atoms and 15 to 4 mol% of an aromatic dicarboxylic acid unit, the thickness of the oxygen-permeable layer (A) is 15 to 40% of the total thickness of the multilayer container, the thickness of the oxygen-absorbing layer (B) is 10 to 40% of the total thickness of the multilayer container, and wherein an adhesive layer (E) containing an adhesive resin as the main component thereof is layered as an outer layer of the gas-barrier layer (D), and an oxygen-absorbing layer (F) formed of an oxygen-absorbing resin composition containing a deoxidant composition and a thermoplastic resin is layered as an outer layer of the adhesive layer (E), and the thickness of the oxygen-absorbing layer (F) is 10 to 40% of the total thickness of the multilayer container.

2. The multilayer container according to claim 1, wherein a protective layer (G) containing a thermoplastic resin as the main component thereof is layered as an outer layer of the oxygen-absorbing layer (F).

3. The multilayer container according to claim 1 or 2, wherein the thickness of the gas-barrier layer (D) is 2 to 20% of the total thickness of the multilayer container.

4. The multilayer container according to any one of claims 1 to 3, wherein the deoxidant composition for use in the oxygen-absorbing layer (B) is a deoxidant composition containing an iron powder as the main component thereof.

5. The multilayer container according to claim 4, wherein the maximum particle size of the iron powder is 0.5 mm or less, and the mean particle size thereof is 0.3 mm or less.

6. The multilayer container according to any one of claims 1 to 5, wherein the ratio by mass of the deoxidant composition to the thermoplastic resin in the oxygen-absorbing layer (B) (deoxidant composition/thermoplastic resin) is 5/95 to 50/50.

7. The multilayer container according to any one of claims 1 to 6, wherein the thermoplastic resin for use in the oxygen-absorbing layer (B) is a resin containing polypropylene as the main component thereof.

8. The multilayer container according to any one of claims 1 to 7, wherein the thermoplastic resin for use in the oxygen-absorbing layer (B) is a resin containing polypropylene as the main component thereof, and being a recycled resin.

9. The multilayer container according to any one of claims 1 to 8, wherein the oxygen-permeable resin for use in the oxygen-permeable layer (A) is a polypropylene resin.

10. The multilayer container according to any one of claims 2 to 9, wherein the thermoplastic resin for use in the protective layer (G) is at least one selected from the group consisting of a polypropylene resin, a polyamide resin and a polyester resin.

11. The multilayer container according to any one of claims 2 to 10, wherein the thickness of the protective layer (G) is 15 to 60% of the total thickness of the multilayer container.

**Patentansprüche**

1. Ein mehrschichtiger Behälter, umfassend, geschichtet in dieser Reihenfolge von einer inneren Schicht zu einer äußeren Schicht, eine sauerstoffdurchlässige Schicht (A), die ein sauerstoffdurchlässiges Harz als Hauptbestandteil derselben enthält, eine sauerstoffabsorbierende Schicht (B), gebildet aus einer sauerstoffabsorbierenden Harzzusammensetzung, die eine desoxidierende Zusammensetzung und ein thermoplastisches Harz enthält, eine Klebeschicht (C), die ein Klebeharz als Hauptbestandteil derselben enthält, und eine Gassperrschicht (D), die ein Gassperrharz als Hauptbestandteil derselben enthält, wobei:

das Gassperrharz ein Polyamidharz (X) ist, das eine Diamineinheit, die eine Metaxylylendiamineinheit in einer Menge von 70 mol-% oder mehr enthält, und eine Dicarbonsäureeinheit, die 85 bis 96 mol-% einer $\alpha,\omega$-linearen aliphatischen Dicarbonsäureeinheit mit 4 bis 20 Kohlenstoffatomen und 15 bis 4 mol-% einer aromatischen Dicarbonsäureeinheit enthält, beinhaltet, die Dicke der sauerstoffdurchlässigen Schicht (A) 15 bis 40% der Gesamtdicke des mehrschichtigen Behälters beträgt,

die Dicke der sauerstoffabsorbierenden Schicht (B) 10 bis 40% der Gesamtdicke des mehrschichtigen Behälters beträgt,

und wobei eine Klebeschicht (E), die ein Klebeharz als Hauptbestandteil derselben enthält, als eine äußere Schicht der Gassperrschicht (D) geschichtet ist und eine sauerstoffabsorbierende Schicht (F), gebildet aus einer sauerstoffabsorbierenden Harzzusammensetzung, die eine desoxidierende Zusammensetzung und ein thermoplastisches Harz enthält, als eine äußere Schicht der Klebstoffschicht (E) geschichtet ist und die Dicke der sauerstoffabsorbierenden Schicht (F) 10 bis 40% der Gesamtdicke des mehrschichtigen Behälters beträgt.

2. Der mehrschichtige Behälter nach Anspruch 1, wobei eine Schutzschicht (G), die ein thermoplastisches Harz als Hauptbestandteil derselben enthält, als eine äußere Schicht der sauerstoffabsorbierenden Schicht (F) geschichtet ist.

3. Der mehrschichtige Behälter nach Anspruch 1 oder 2, wobei die Dicke der Gassperrschicht (D) 2 bis 20% der Gesamtdicke des mehrschichtigen Behälters beträgt.

4. Der mehrschichtige Behälter nach einem der Ansprüche 1 bis 3, wobei die desoxidierende Zusammensetzung zur Verwendung in der sauerstoffabsorbierenden Schicht (B) eine desoxidierende Zusammensetzung ist, die ein Eisenpulver als Hauptbestandteil derselben enthält.

5. Der mehrschichtige Behälter nach Anspruch 4, wobei die maximale Teilchengröße des Eisenpulvers 0,5 mm oder weniger beträgt und der mittlere Teilchendurchmesser desselben 0,3 mm oder weniger beträgt.

6. Der mehrschichtige Behälter nach einem der Ansprüche 1 bis 5, wobei das Massenverhältnis der desoxidierenden Zusammensetzung zu dem thermoplastischen Harz in der sauerstoffabsorbierenden Schicht (B) (desoxidierende Zusammensetzung/thermoplastisches Harz) 5/95 bis 50/50 beträgt.

7. Der mehrschichtige Behälter nach einem der Ansprüche 1 bis 6, wobei das thermoplastische Harz zur Verwendung in der sauerstoffabsorbierenden Schicht (B) ein Harz ist, das Polypropylen als Hauptbestandteil desselben enthält.

8. Der mehrschichtige Behälter nach einem der Ansprüche 1 bis 7, wobei das thermoplastische Harz zur Verwendung in der sauerstoffabsorbierenden Schicht (B) ein Harz ist, das Polypropylen als Hauptbestandteil desselben enthält, und ein wiederaufbereitetes Harz ist.

9. Der mehrschichtige Behälter nach einem der Ansprüche 1 bis 8, wobei das sauerstoffdurchlässige Harz zur Verwendung in der sauerstoffdurchlässigen Schicht (A) ein Polypropylenharz ist.

10. Der mehrschichtige Behälter nach einem der Ansprüche 2 bis 9, wobei das thermoplastische Harz zur Verwendung in der Schutzschicht (G) mindestens eines, ausgewählt aus der Gruppe bestehend aus einem Polypropylenharz, einem Polyamidharz und einem Polyesterharz, ist.

11. Der mehrschichtige Behälter nach einem der Ansprüche 2 bis 10, wobei die Dicke der Schutzschicht (G) 15 bis 60% der Gesamtdicke des mehrschichtigen Behälters beträgt.

**Revendications**

1. Récipient multicouche comprenant, stratifiées dans cet ordre d'une couche intérieure à une couche extérieure, une couche perméable à l'oxygène (A) contenant une résine perméable à l'oxygène en tant que composant principal de celle-ci, une couche absorbant l'oxygène (B) formée d'une composition de résine absorbant l'oxygène contenant une composition de désoxydant et une résine thermoplastique, une couche adhésive (C) contenant une résine adhésive en tant que composant principal de celle-ci, et une couche de barrière aux gaz (D) contenant une résine de barrière aux gaz en tant que composant principal de celle-ci, dans lequel :

la résine de barrière aux gaz est une résine de polyamide (X) comprenant un motif diamine contenant un motif métaxylylènediamine en une quantité de 70 % en moles ou plus et un motif acide dicarboxylique contenant 85 à 96 % en moles d'un motif acide dicarboxylique aliphatique $\alpha,\omega$-linéaire ayant 4 à 20 atomes de carbone et 15 à 4 % en moles d'un motif acide dicarboxylique aromatique,

l'épaisseur de la couche perméable à l'oxygène (A) est de 15 à 40 % de l'épaisseur totale du récipient multicouche,

l'épaisseur de la couche absorbant l'oxygène (B) est de 10 à 40 % de l'épaisseur totale du récipient multicouche, et dans lequel une couche adhésive (E) contenant une résine adhésive en tant que composant principal de celle-ci est stratifiée en tant que couche extérieure de la couche de barrière aux gaz (D), et une couche absorbant l'oxygène (F) formée d'une composition de résine absorbant l'oxygène contenant une composition de désoxydant et une résine thermoplastique est stratifiée en tant que couche extérieure de la couche adhésive (E), et l'épaisseur de la couche absorbant l'oxygène (F) est de 10 à 40 % de l'épaisseur totale du récipient multicouche.

2.  Récipient multicouche selon la revendication 1, dans lequel une couche protectrice (G) contenant une résine thermoplastique en tant que composant principal de celle-ci est stratifiée en tant que couche extérieure de la couche absorbant l'oxygène (F).

3.  Récipient multicouche selon la revendication 1 ou 2, dans lequel l'épaisseur de la couche de barrière aux gaz (D) est 2 à 20 % de l'épaisseur totale du récipient multicouche.

4.  Récipient multicouche selon l'une quelconque des revendications 1 à 3, dans lequel la composition de désoxydant pour une utilisation dans la couche absorbant l'oxygène (B) est une composition de désoxydant contenant une poudre de fer en tant que composant principal de celle-ci.

5.  Récipient multicouche selon la revendication 4, dans lequel la taille de particule maximale de la poudre de fer est de 0,5 mm ou moins, et la taille de particule moyenne de celle-ci est de 0,3 mm ou moins.

6.  Récipient multicouche selon l'une quelconque des revendications 1 à 5, dans lequel le rapport en masse de la composition de désoxydant sur la résine thermoplastique dans la couche absorbant l'oxygène (B) (composition de désoxydant/ résine thermoplastique) est de 5/95 à 50/50.

7.  Récipient multicouche selon l'une quelconque des revendications 1 à 6, dans lequel la résine thermoplastique pour une utilisation dans la couche absorbant l'oxygène (B) est une résine contenant du polypropylène en tant que composant principal de celle-ci.

8.  Récipient multicouche selon l'une quelconque des revendications 1 à 7, dans lequel la résine thermoplastique pour une utilisation dans la couche absorbant l'oxygène (B) est une résine contenant du polypropylène en tant que composant principal de celle-ci, et est une résine recyclée.

9.  Récipient multicouche selon l'une quelconque des revendications 1 à 8, dans lequel la résine perméable à l'oxygène pour une utilisation dans la couche perméable à l'oxygène (A) est une résine de polypropylène.

10. Récipient multicouche selon l'une quelconque des revendications 2 à 9, dans lequel la résine thermoplastique pour une utilisation dans la couche protectrice (G) est au moins l'une choisie dans le groupe constitué par une résine de polypropylène, une résine de polyamide et une résine de polyester.

11. Récipient multicouche selon l'une quelconque des revendications 2 à 10, dans lequel l'épaisseur de la couche protectrice (G) est de 15 à 60 % de l'épaisseur totale du récipient multicouche.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000273328 A
- US 20040076781 A1

- JP 3978542 B